Europäisches Patentamt

European Patent Office

Office européen des brevets

(11) Veröffentlichungsnummer: **0 096 087**
**B1**

(12) **EUROPÄISCHE PATENTSCHRIFT**

(19)

(12)

(45) Veröffentlichungstag der Patentschrift:
14.01.87

(21) Anmeldenummer: **82104914.5**

(22) Anmeldetag: **04.06.82**

(51) Int. Cl.⁴: **B 21 D 39/06, E 06 C 7/08**

(54) Verfahren und Hohlprofil zum Verbinden mit anderen Profilen durch Aufmuffen, Aufbördeln, o. dgl.

(43) Veröffentlichungstag der Anmeldung:
**21.12.83 Patentblatt 83/51**

(45) Bekanntmachung des Hinweises auf die Patenterteilung:
**14.01.87 Patentblatt 87/3**

(84) Benannte Vertragsstaaten:
**AT BE CH DE FR GB IT LI LU NL SE**

(56) Entgegenhaltungen:
DE-A-2 125 500
FR-A-1 408 953
FR-A-1 515 321
FR-A-1 550 157
FR-A-2 168 710
GB-A-663 497
GB-A-1 590 221
US-A-3 140 540
US-A-3 283 402
US-A-4 205 426

(73) Patentinhaber: **VEREINIGTE ALUMINIUM- WERKE AKTIENGESELLSCHAFT, Berlin - Bonn Postfach 2468 Georg- von- Boeselager- Strasse 25, D-5300 Bonn 1 (DE)**

(72) Erfinder: **Osterwald, Werner, Ing., Lindenweg 24, D-3000 Hannover 91 (DE)**
Erfinder: **Böttger, Klaus- Georg, Ing., Salzweg 36, D-3003 Ronnenberg 1 (DE)**
Erfinder: **Kader, Rudolf, Dr.- Ing., An der Trift 8 E, D-3000 Hannover 71 (DE)**

(74) Vertreter: **Müller- Wolff, Thomas, Dipl.- Ing., c/o Vereinigte Aluminium- Werke AG Patentabteilung Postfach 2468, D-5300 Bonn 1 (DE)**

## Beschreibung

Die Erfindung betrifft ein Verfahren zur Herstellung eines Hohlprofils zur Verbindung mit einem zweiten Hohlprofile durch Aufmuffen oder Aufbördeln gemäß Oberbegriff von Anspruch 1. Es wird hierbei von dem durch die FR-A- 1408935 gegebenen Stand der Technik ausgegangen. Als nachteilig müssen hier die scharfen Knicke im Endbereich des Rohres empfunden werden, weil hiervon Kerbspannungen ausgehen können.

Es ist bekannt, Hohlprofile durch Aufmuffen oder Aufbördeln mit einem zweiten Profil zu verbinden. Sofern die Werkstoffe der zu verbindenen Profile niedrige Dehnungswerte aufweisen, besteht die Gefahr, daß bei dem Vorgang des Aufmuffens oder Aufbördelns Risse entstehen, die den Verbund der Profile nachhaltig schwächen. Da diese Risse häufig nicht sofort erkennbar sind, kann die Betriebssicherheit bei der bisherigen Betriebweise nicht garantiert werden.

Ein großer Teil der Hohlprofil formen wird heute durch Strangpressen hergestellt. Die Oberfläche der Strangpreßergebnisse ist aus den verschiedensten Gründen mit Nuten oder Rippen versehen, die beispielsweise einer zusätzlichen Verschraubung oder Versteifung dienen. Beim Aufmuffen oder Aufbördeln der geriffelten Oberflächen entstehen zwangsläufig an den Nutentälern oder den Rippenflanken Schwächungszonen, die ein vorzeitiges Anreißen während des Umformvorganges bewirken.

Es wurden auch schon längsnahtgeschweißte Rohre durch Aufmuffen oder Aufbördeln mit anderen Profilen verbunden. Hierbei ist eine erhöhte Gefahr des Aufreißens in der Nähe der Verbindungszone, da durch die Inhomogenitäten an der Schweißstelle die Grenze zulässiger Dehnungswerte rasch überschritten ist. Die Schwierigkeiten beim Aluminium-Leiternsprossenprofil haben sogar zu Sonderentwicklungen geführt, bei denen die Verbindung durch einen innerhalb des Profils angeordneten Mittelsteg zur Aufnahme einer Schraubverbindung ermöglicht wird (s. DE-GU-77 37 792).

Aufgabe der vorliegenden Erfindung ist es, ein Verfahren und ein Metallprofil zu entwickeln, so daß das Fließen des Materials bei der Verbindung durch Aufmuffen oder Aufbördeln unterbunden wird und dadurch die Wanddicke der Profile relativ dünn gehalten werden kann. Diese Aufgabe ist mit dem Verfahren gemäß Anspruch 1 gelöst, wobei Anspruch 2 das hierfür geeignete Hohlprofil zum Inhalt hat.

Der Grundgedanke der Erfindung läßt sich wie folgt erklären:

Während bisher das für den Vorgang des Aufmuffens oder Aufbördelns benötigte Material aus der Wanddicke der Profilform genommen wurde, wird nun erstmalig vorgeschlagen, die Wandung vor dem Umformvorgang zu wellen und beim Aufmuffen oder Aufbördeln lediglich zu glätten. Dabei kann die Wanddicke des Profils relativ dünn gehalten werden, denn ein Fließen des Materials soll erfindungsgemäß unterbunden werden. Die Ausprägung der Wellung ist so zu bemessen, daß das gewellte Profil einerseits durch die zur Aufnahme der Befestigung erforderliche Bohrung einschiebbar ist, andererseits aber auch ermöglicht wird, daß beim Aufmuffen die für den Verformungsvorgang erforderliche Materialmenge vorhanden ist. Es handelt sich also im Grunde um einen "Ziehharmonika-Effekt", wobei die ziehharmonikaartige Profilform in die Bohrung des zu verbindenden Profils eingeschoben und anschließend geglättet wird.

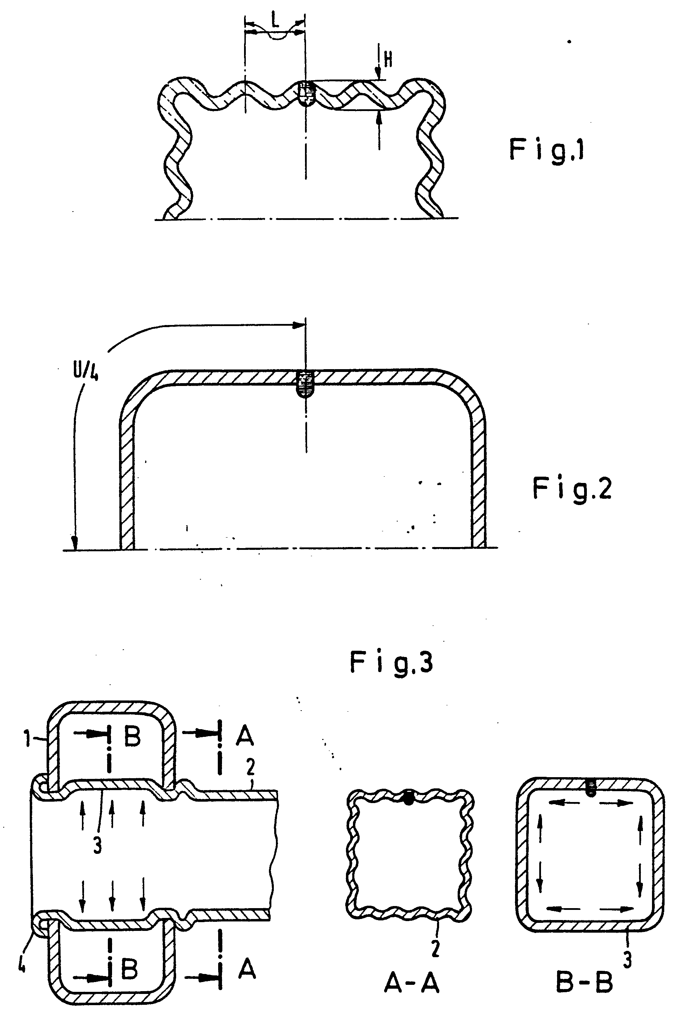

Ein bevorzugter Anwendungsfall der erfindungsgemäßen Lösung bildet eine Leiter, bestehend aus Leiterholm und Sprossen. Bei dieser art Verbindung wird eine Ausstanzung in den Flanken des Leiterholms vorgenommen, die dem Querschnitt der Leitersprosse entspricht. Die Leitersprosse wird durch den Holm hindurchgesteckt, und zwar soweit, daß an der Außenseite der Leiter die Sprosse ca. 5mm übersteht. Die Verbindung wird einerseits erreicht durch Expansion der Leitersprosse in dem Bereich, der sich innerhalb des Leiterholms befindet und andererseits durch Aufbördeln des den Leiterholm überragenden Sprossenendes. Fig. 3 verdeutlicht das Verfahren.

Bei dieser Art der Verbindung werden hohe Ansprüche an das Sprossenprofil gestellt hinsichtlich Expansions- und Aufbördelungsfähigkeit, da beim Expandieren und Aufbördeln eine plastische Dehnung der Wanddicke des Sprossenprofils erfolgt. Es hängt von der Art des eingesetzten Werkstoffs für das Sprossenprofil ab, inwieweit eine plastische Dehnung des Materials durchführbar ist. Im Regelfall kann bei weichen Materialien mit hohen Dehnungswerten eine größere Expansion bzw. Aufbördelung erfolgen als bei härteren Materialien mit niedrigen Dehnungswerten.

Bei hochbelasteten Profilen, wie z.B. bei Leiterprofilen kann aber der Werkstoff nicht einen niedrigen Dehnwert aufweisen, sondern man wird ein Material mit großer Härte wählen, um den Belastungen, insbesondere an der Verbindungsstelle, in jedem Falle gewachsen zu sein.

Eine Einschränkung in der Bördel- oder Expansionsfähigkeit eines Sprossenprofils kann auch in Materialschwächungen des Profilguerschnitts begründet sein, wie sie z.B. Schweißnähte bei längsnahtgeschweißten Rohren oder über Brücken extrudierten Rohren vorhanden sind.

Da für eine funktionsfähige Verbindung von zwei Profilen in der oben beschriebenen Art durch Aufbördeln oder Expandieren eine gewisse Mindestaufbördelung oder -expansion erfolgen muß, besteht je nach Materialart und -zustand (hart oder weich) bzw. Herstellart des Profils (längsnahtgeschweißt oder extrudiert) die Gefahr, daß durch die Aufbördelung oder Expansion die Dehnfähigkeit der Wanddicke des Sprossenprofils überfordert ist und aufreißt. Eine solche Verbindung erfüllt dann nicht ihren Zweck.

Um eine Entlastung der Wanddicke beim Aufbördel- bzw. Expansionsvorgang zu bewirken, wird erfindungsgemäß vorgeschlagen, das Hohlprofil mit Längswellen gleicher Wanddicke zu versehen mit dem Effekt, daß beim Aufbördeln und Expandieren im Idealfall die Wanddicke des Hohlprofils nicht gedehnt wird, sondern das zusätzliche Materialvolumen, das für den äußeren Querschnitt im expandierten bzw. aufgebördelten Bereich erforderlich ist, ganz oder teilweise durch Streckung der Längswellen zur Verfügung gestellt wird. Dabei ist es besonders günstig, wenn die Wellentäler und -spitzen Radien aufweisen, um Kerbwirkungen zu vermeiden. Je nach Materialart und Herstellungszustand kann es ausreichend sein, die Wellung so zu bemessen, daß beim Aufbördel- oder Expansionsvorgang jeweils ein gewisser Anteil aus der Streckung des laängsgeweilten Rohres bzw. aus der Wanddicke erfolgt. Unter ökonomischen Aspekten ist im Regelfall ein Interesse vorhanden, die Längswellung des Profiles möglicht gering zu halten, um, das Hohlprofil nich unnötig schwer und damit teuer werden zu lassen.

Die Art der vorteliend beschrieben Befestigung ist insbesondere für längsnahtgeschweißte Rohre aus Aluminium geeignet. Da Aluminium im Vergleich zu Stahl geringere Dehnungswerte aufweist, können bei der Verformung ungleichmäßige Fließerscheinigungen auftreten. Dieses führte bisher stets zu hohen Ausschußraten und aufwendigen Prüfverfahren, da die Rißentstehung nicht sofort erkannt werden kann. Dieser spezielle Anwendungsfall begründet den erheblichen technischen Fortschritt der vorliegenden Erfindung, da bei längsnahtgeschweißten Rohren nunmehr weder die Schweißnaht noch das dünnwandige Aluminium während der Umformung einer hohen Beanspruchung unterliegt.

Im folgenden wird die Erfindung an Hand mehrerer Beispiele näher erläutert. Es zeigen:

Fig. 1 des Profil in gewelltem Zustand,

Fig. 2 des Profil in geglättetem Zustand (aufgemufft),

Fig. 3 Vorgang des Aufbördelns in einem Holm,

Fig. 4 schematische Verfahrensdarstellung zur Erzeugung des erfoderlichen Profils.

In Fig. 1 ist das gewellte Profil dargestellt. Die Amplitude der Welle ist mit H, die Längs einer Welle mit L bezeichnet. Für den Gesamtumfang des aufgebördelten Teils gilt dann näherungsweise die Beziehung, daß der Umfang U = der Summe aller Wellenlängen L ist: U = n.L Für den Betriebsfall kann man eine einfache Beziehung aus der Länge L und der Amplitudenhöhe H wie folgt herstellen: der Umfang U entspricht der Anzahl der Wellen n multipliziert mit der Amplitudenhöhe H und der Konstanten $\pi$, d. h. U = $\pi$ x H x n.

In Fig. 2 ist ein Teilquerschnitt des aufgemufften Profils zu erkennen. Der Viertelumfang ist mit 4 bezeichnet. Es ist zu erkennen, daß die Wanddicke im wesentlichen unverändert blieb, während durch die Glättung der Wellen der Umfang deutlich zugenommen hat. Das Spreizwerkzeug muß selbstverständlich so beschaffen sein, daß eine Quetschung oder Kantung des Materials beim Ausmuffen verhindert wird.

In Fig. 3 ist der Vorgang des Aufmuffens innerhalb eines Holmes 1 dargestellt. Das gewellte Rohr 2 ist im aufgemufften Teil 3 mit dem Holm 1 fest verbunden. Außerhalb des Holmes befindet sich die Bördelkante 4. Der Schnitt AA der Fig. 3 zeigt das gewellte Rohr 2 3m Querschnitt. Daneben ist im Schnitt BB das aufgemuffte Rohr 3 dargestellt, wobei die Pfeile die Richtung angeben, in der das Material gelängt wurde.

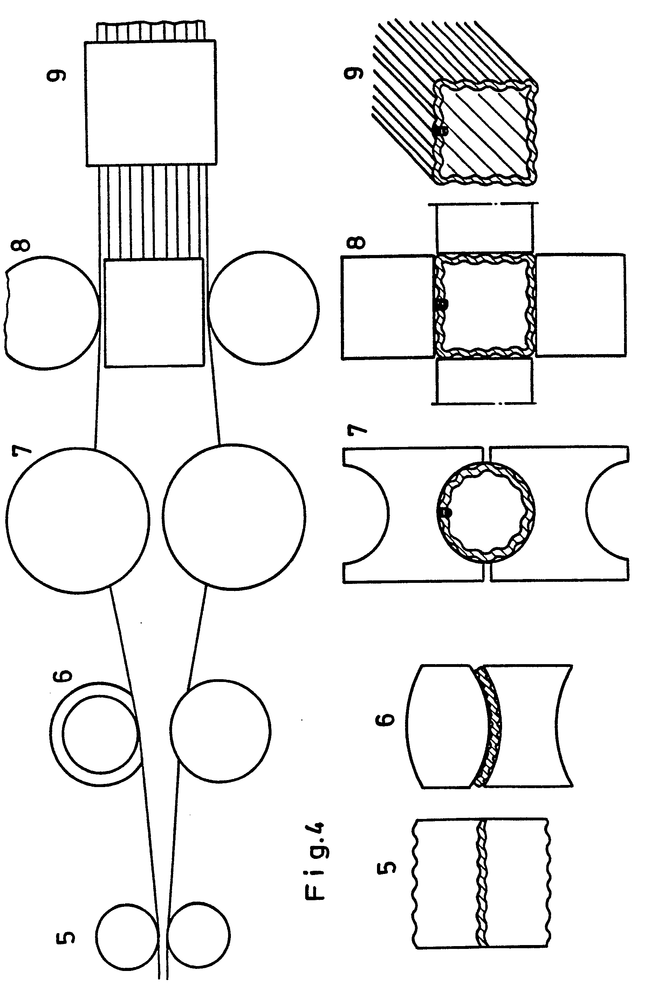

In Fig. 4 ist der Verfahrensablauf beim Herstellen des Profiles gezeigt. Im Rollenpaar 5 wird die Wellung erzeugt, aus der später das erfindungsgemäße Profil hergestellt wird. Das Walzenpaar 6 besteht aus einer konvexen Oberwalze und einer konkaven Unterwalze, die das gewellte Grundprofil in einer ersten Biegung verformen. Das Walzenpaar 7 formt das Grundprofil. An dieser Stelle findet die Induktionsschweißung statt. Mit 8 sind die Ralibrierwalzen bezeichnet, die das Hohlprofil ausbilden. 9 zeigt das fertige Profil.

**Patentansprüche**

1. Verfahren zur Herstellung eines Hohlprofils (2) zur Verbindung mit einem zweiten Hohlprofil (1) durch Aufmuffen oder Aufbördeln, wobei das erste Hohlprofil deformiert und anschließend an der Verbindungsstelle unter Beibehaltung der Wandstärke aufgeweitet wird, dadurch gekennzeichnet, daß eine durchgehende, aus sinusförmigen Bögen bestehende Längswellung durch Rollformen in ein Bandprofil eingebracht, das Bandprofil zum ersten Hohlprofil (2) verschweißt und in ein durchbohrtes zweites Profil (1) eingesteckt und danach die Wellung des ersten Hohlprofils (2) ils ganz oder teilweise geglättet wird, wobei die Gesamtlänge der Wellung (n . l) im Querschnitt gesehen dem Umfang (u) der Profilform im aufgemufften/aufgebördelten Zustand entspricht.

2. Hohlprofil (2) zur Verbindung mit einem zweiten Hohlprofil (1) durch Aufmuffen oder Aufbördeln gemäß Anspruch 1, bestehend aus einem plastisch verformbaren, rückstellarmen Werkstoff von beliebigem Querschnitt, z.B. in Kreis- oder Rechteckform, in den gegebenenfalls Nuten oder Riffelungen eingearbeitet sind, dadurch gekennzeichnet, daß die Wandung des ersten Hohlprofils (2) mit stetigen, sinusförmigen Bögen längsgewellt ist und die Wellenspitzen und -täler keine singulären Stellen aufweisen.

## Claims

1. A method for the production of a hollow section (2) for connection with a second hollow section (1) by coupling or flanging, whereas the first hollow section is deformed and consequently expanded at the section to be connected under maintenance of the wall thickness, characterized in that a constant sinusoidal longitudinal corrugation is formed in a strip section by rolling, the strip section is welded to the first hollow section (2), and is inserted into the bore of the second section (1) and the corrugation of the first hollow section (2) is totally or partially smoothed, wherein the total length of said corrugation (n - l) viewed in cross section corresponds to the circumference (u) of the section in the coupled and flanged-on state.

2. A hollow section (2) for connection with a second hollow section (1) by coupling or flanging, according to Claim 1, comprising a plastically deformable, low-resilience material of any desired cross section, e.g. in circular or rectangular shape, into which grooves or flutings are formed, characterized in that the wall of the first hollow section (2) is longitudinally corrugated with constant, sinusoidal arcs and whereas peaks and troughs of said sinusoidal corrugations have no singular points.

## Revendications

1 - Procédé de fabrication d'un profilé creux (2) desting à être assemblé a un deuxième profilé creux (1) par mandrinage ou roulage des bords, le premier profilé creux étant déformé et, ensuite, élargi dans la zone d'assemblage tout en conservant son épaisseur de paroi, caractérisé en ce qu'on imprime à un profilé en bande une ondulation longitudinale continue, composée d'arcs de sinusoïdes, par profilage à la molette on soude le profilé en bande pour former le premier profilé creux (2) et on l'emmanche dans un deuxième profilé (1) percé d'un trou et, ensuite, on lisse entièrement ou partiellement l'ondulation du premier profilé creux (2), la longueur totale de l'ondulation (n-l) correspondant, en section transversale, au périmètre (U) de la forme du profilé à l'état mandriné/à bords roulés.

2 - Profilé creux (2) destiné à être assemblé à un deuxième profilé creux (1) par mandrinage ou roulage des bords, selon la revendication 1, composé d'une matière plastiquement déformable, à faible reprise de forme, d'une section quelconque, par exemple, d'une section circulaire ou rectangulaire, et dans laquelle sont éventuellement formées des rainures ou striures, caractérisé en ce que la paroi du premier profilé creux (2) présente une ondulation longitudinale formée d'arcs de sinusoïdes ininterrompus, et en ce que les crêtes et creux d'ondes ne présentent pas de points singuliers.

0 096 087

Fig.1

Fig.2

Fig.3

A-A   B-B

Fig. 4